# EUROPÄISCHE PATENTSCHRIFT

(11) **EP 3 735 541 B1**
(45) Veröffentlichungstag und Bekanntmachung des Hinweises auf die Patenterteilung: **22.12.2021**
(21) Anmeldenummer: 19718100.1
(22) Anmeldetag: 09.04.2019
(51) Int. Cl.: F16B 39/02, F16B 39/286

(54) **FESTLEGEVORRICHTUNG**
FIXING DEVICE
DISPOSITIF DE FIXATION

(30) Priorität: 20.04.2018 DE 102018003247
(43) Veröffentlichungstag der Anmeldung: 11.11.2020
(73) Patentinhaber: Spieth-Maschinenelemente Gmbh & Co Kg, 73730 Esslingen (DE)
(72) Erfinder: HUND, Alexander, 73773 Aichwald (DE); KIENLE, Christian, 70378 Stuttgart (DE)
(74) Vertreter: Bartels und Partner, Patentanwälte
(86) Internationale Anmeldenummer: PCT/EP2019/058907
(87) Internationale Veröffentlichungsnummer: WO 2019/201666

(56) Entgegenhaltungen:
- EP-A1- 0 794 338
- DE-A1- 3 521 563
- FR-A1- 2 743 121
- GB-A- 489 885

## Beschreibung

Die Erfindung betrifft eine Festlegevorrichtung mit mindestens zwei Gewinderingen, die zwischen sich eine Membran aufnehmen, die einstückiger Bestandteil dieses Ringpaares ist und die durch eingebrachte, in einem unmontierten Zustand geradlinig verlaufende Schlitze, die allesamt nach außen hin in die Umgebung ausmünden, sowie an nur teilweise ringförmig verlaufenden Stegen sich abstützend zu den Ringen auf Abstand gehalten ist, und mit mindestens einer Spannschraube, mittels der der axiale Abstand zwischen den Ringen einstellbar ist.

Festlegevorrichtungen sind in vielfältiger Ausgestaltung bekannt, um Bau-, Maschinen- und Anlagenteile aneinander festzulegen und in ihrer Position zueinander zu sichern. EP 0 794 338 A1 offenbart eine Festlegevorrichtung mit einem Grundkörper, in den eine geradlinig verlaufende, ringförmige Innennut und weiter eine geradlinig verlaufende, ringförmige Außennut eingebracht sind. Die in der Art von Einstichen eingebrachten Nuten unterteilen die Festlegevorrichtung in zwei Gewinderinge, die durch eine Membran miteinander verbunden sind und von denen der eine Ring als Stellmutter und der andere Ring als Sicherungsmutter dient. Über ringförmige, konzentrisch zueinander angeordnete Stege, die die Nuten radial innen oder außen begrenzen, ist die Membran mit dem jeweiligen Gewindering verbunden und an diesem gehalten. Insoweit ist die Membran einstückiger Bestandteil des Ringpaares. In axialer Richtung sind mehrere, entlang des Durchmessers verteilte Spannschrauben in das Ringpaar eingebracht und durchgreifen unter Freilassen der Stege beide Nuten sowie die zwischen ihnen angeordnete, radial umlaufende Membran.

Die mit einem Innengewinde versehene Festlegevorrichtung wird beispielsweise dazu eingesetzt, ein Maschinenteil, wie ein Lager, an einer Spindelaufnahme oder dergleichen an einem zugehörigen Außengewinde derselben festzulegen und zu sichern. Alternativ ist die Verwendung einer Festlegevorrichtung mit einem Außengewinde denkbar, beispielsweise in Form einer Schraube, die an einem Bauteil an dessen zugehörigem Innengewinde festgelegt und gesichert werden kann. Über die Spannschrauben werden die beiden Gewinderinge gegeneinander verspannt, so dass die Festlegevorrichtung aufgeschraubt auf einem Gewindebolzen oder einem vergleichbaren Bauteil mit Außengewinde unter Eliminieren des Füge- oder Gewindeflankenspieles gesichert werden kann. Dabei wird die Membran mittels der Sicherungsmutter ohne plastisch zu verformen in einer axialen Richtung auf die Stellmutter zugestellt und die dabei über die gleichmäßig verformte Ring-Membran erzeugten Sicherungskräfte werden von der Betriebslast im festgelegten Zustand der Vorrichtung bei gleicher Kraftrichtung überlagert, so dass sich im Betrieb die Kräfte aufsummieren und eine sichere Verbindung erreicht ist. Insbesondere bei Festlegevorrichtungen mit Gewinderingpaaren kleinen Durchmessers bereitet das Einbringen des Inneneinstiches von der Innenseite her Probleme, was den Herstellaufwand für die bekannte Lösung deutlich erhöht.

Um demgegenüber die Fertigung zu vereinfachen sowie die Spannwirkung zu verbessern, offenbart DE 30 20 521 A1 eine Festlegevorrichtung mit von außen in radialer Richtung eingebrachten Schlitzen, die von außen nach innen durchgehend den Ringkörper in zwei Gewinderinge unterteilen. Ein aufwändiges Einbringen von Nuten mit vorbestimmter Einstichtiefe entfällt, da der Ringkörper unter Bildung einzelner Ringsegmente komplett durchtrennt wird. Bei dieser Festlegevorrichtung der eingangs genannten Art nehmen mindestens zwei Gewinderinge zwischen sich eine Membran auf, die einstückiger Bestandteil dieses Ringpaares ist und die durch eingebrachte, in einem unmontierten Zustand geradlinig verlaufende Schlitze, die allesamt nach außen hin in die Umgebung ausmünden, sowie an nur teilweise ringförmig verlaufenden Stegen sich abstützend zu den Ringen auf Abstand gehalten ist. Mit zwei oder mehr Spannschrauben ist der axiale Abstand zwischen den Ringen einstellbar.

Bei der derart ausgebildeten Festlegevorrichtung sind zwei oder drei Schlitze bzw. Schlitzreihen in Achsrichtung hintereinander angeordnet. Die zwischen den in Umfangsrichtung verlaufenden Schlitzen angeordneten, einzelnen Stege dienen als Gelenkstellen, wodurch ein Verkanten der Gewinderinge bei deren Festlegen verhindert werden soll, und die als Durchtrittsstellen für die in das Ringpaar eingebrachten Spannschrauben dienen. Die von den Spannschrauben durchgriffenen Stege führen zu einer Aussteifung dieser Gelenkstellen und mithin ungewollt zu einer Einschränkung der Bewegbarkeit der Membran zwischen benachbarten Schlitzen, was zu einer Reduzierung der Sicherungskräfte führt. Dieser Mangel wurde auch bereits in der genannten Offenlegungsschrift erkannt und bei einer weiteren Ausführungsform demgemäß vorgeschlagen, die Schlitze von Anfang an bogenförmig zwischen den Gewinderingen anzuordnen, um dergestalt sogenannte waagscheidartige Balken auszubilden.

Das Einbringen von bogenförmig verlaufenden Schlitzen im unmontierten Zustand der bekannten Festlegevorrichtung generiert wiederum einen erhöhten Fertigungsaufwand und beseitigt nicht das Problem der ausgesteiften Gelenkstellen über die einzelnen, von Spannschrauben durchgriffenen Festlegestege. Vielmehr kann aufgrund der bogenförmigen Anordnung der jeweiligen Durchgriffsschlitze ein Rückfederungseffekt für die Membranteile zwischen zwei durchgriffenen Festlegestegen beobachtet werden, was die angestrebte freie Verformbarkeit für die Membran zwecks Erhalt erhöhter Sicherungskräfte zusätzlich erschwert. Insbesondere bei kleinaufbauenden Gewinderingkonstruktionen erweist sich die bekannte Lösung aufgrund der beschriebenen Rückfederungseffekte als wenig geeignet.

Ausgehend von diesem Stand der Technik liegt der Erfindung die Aufgabe zugrunde, die bekannten Lösungen zu verbessern, insbesondere die vorstehend beschriebenen Nachteile im Stand der Technik zu vermeiden.

Diese Aufgabe wird gelöst durch eine Festlegevorrichtung mit den Merkmalen des Patentanspruchs 1 in seiner Gesamtheit. Eine erfindungsgemäße Festlegevorrichtung zeichnet sich dadurch aus, dass zumindest eine Spannschraube zwischen zwei benachbarten Stegen die Membran durchgreift, dass im unmontierten Zustand die Membran unverformt sich parallel zu den Ringen ausrichtet und in einem montierten Zustand zwischen den Stegen in einem verformten Zustand in Richtung auf mindestens einen der Ringe zumindest teilweise unter Bildung eines Schräg- oder Bogenverlaufs zugestellt ist, sobald der Abstand zwischen den Ringen eines Paares mittels der jeweils zuordenbaren Spannschraube verringert ist, und dass die zumindest eine die Membran durchgreifende Spannschraube benachbart angeordnete Schlitze durchgreift, die von der Membran separiert sind.

Dadurch, dass zumindest eine Spannschraube die Membran sowie die beidseits zu dieser verlaufenden Schlitze durchgreift, ist eine Materialschwächung der Stege durch ein entsprechendes Durchgangsloch vermieden und der Verbund der durch die Schlitze voneinander getrennten und über die Stege verliersicher und einstückig miteinander verbundenen Gewinderinge verstärkt. Die jeweilige Spannschraube ist bevorzugt mittig zwischen zwei benachbarten Stegen in das Ringpaar eingebracht und sorgt aufgrund des Durchtritts durch die Membran für einen verbesserten Krafteintrag sowie eine erleichterte Verformung der Schlitze beim Montieren. Beim Anziehen der einzelnen Spannschrauben, welche nacheinander den einen Gewindering, den einen Schlitz, die Membran, den anderen Schlitz und den anderen Gewindering durchgreifen bzw. in diesen eingreifen, werden die beiden Gewinderinge derart aufeinanderzubewegt, dass die zuvor parallel zu den Ringen ausgerichteten Schlitze zumindest teilweise einem Schräg- oder Bogenverlauf folgend ausgerichtet werden. In diesem Zusammenhang wäre es auch denkbar, dass bei bestimmten Ausführungsformen ein Teil der eingesetzten Spannschrauben, wie im Stand der Technik aufgezeigt, die Stege zwischen den beiden Ringen durchgreifen.

Vorzugsweise ist die erfindungsgemäße Anordnung derart getroffen, dass die Membran im festgelegten oder montierten Zustand des Gewinderingpaares eine wellenförmige oder ondulierte Membran ausbildet, deren dahingehende Deformierung über die Einspannstelle mit dem Festlegesteg quasi hinausläuft, und der Festlegesteg insoweit den gewünschten freien Wellen- oder Bogenverlauf nicht unterbricht. Es hat sich für einen Durchschnittsfachmann auf dem Gebiet solcher Festlegevorrichtungen als überraschend erwiesen, dass er mit der erfindungsgemäßen Lösung zu einer weit verbesserten Kräfteverteilung in der sich wellenförmig verformenden Membran kommt, was zu erhöhten Sicherungskräften und zu einer verbesserten Kräfteüberlagerung im Betrieb der Vorrichtung führt. Die insoweit zu verformende Membran kann in der Art eines Freischwingers sich spielfrei einstellen, was zu den gewünschten Effekten führt. Dies hat so keine Entsprechung im Stand der Technik.

Die Festlegevorrichtung ist vorzugsweise im Gesamten aus einem Metallwerkstoff, einem Kunststoff oder einer Werkstoffkombination von Metallwerkstoff und Kunststoff gebildet, wobei weiter bevorzugt die Ringe beim Lösen der zumindest einen Spannschraube ihre ursprüngliche Position wieder einnehmen und die Schlitze sowie die dazwischenliegende Membran wieder geradlinig und parallel zu den Ringen ausgerichtet sind. Es versteht sich, dass in axialer Richtung nacheinander mehr als zwei Schlitze zwischen den beiden Gewinderingen eingebracht und zudem mehr als zwei Gewinderinge ausgebildet und paarweise einander zugeordnet sein können. Erfindungsgemäß durchgreift zumindest eine eingesetzte Spannschraube zumindest eine Membran sowie die durch diese voneinander separierten, in axialer Richtung benachbart angeordneten Schlitze. Besonders bevorzugt durchgreift die jeweilige Spannschraube alle entlang der axialen Erstreckung nacheinander angeordneten Schlitze sowie Membranen ohne Durchtritt eines Steges. Die erfindungsgemäße Lösung schließt auch die Verwendung lediglich einer Spannschraube mit ein, die zum Einstellen des axialen Abstandes zwischen den Ringen in diese eingeschraubt ist und zudem die Membran zwischen zwei benachbarten Stegen durchgreift. In der Regel werden jedoch zwei oder mehr Spannschrauben in die Gewinderinge eingeschraubt.

Bei einer bevorzugten Ausführungsform der erfindungsgemäßen Festlegevorrichtung besteht die Membran aus einer Platte, deren Dicke einer Schlitzbreite in ihrem unverformten Zustand entspricht oder kleiner ist. Hieraus ergibt sich der Vorteil einer geringen Materialstärke der Membran auf einer Seite der benachbarten Schlitze, die auf diese Weise gut verformbar zur Ausbildung von Schräg- und Bogenverläufen ist. Mit dem Ziel der Bauraumersparnis werden vorteilhafterweise möglichst schmale Schlitze, also mit einer geringen Breite, an der Festlegevorrichtung ausgebildet, wobei eine plastische Deformation der Membran aufgrund einer allzu geringen Materialstärke zu vermeiden ist. Mitunter ist die Membranstärke dann größer als die Breite der unmittelbar angrenzenden Schlitze. Vorzugsweise weist der jeweilige Schlitz in radialer Richtung gesehen einen rechteckförmigen Querschnitt auf. Eine hiervon abweichende Form ist denkbar, beispielsweise gegenüber einer senkrecht zur Längsachse liegenden Ebene schräggestellte Ober- und Unterseiten oder eine gebogene, insbesondere konkave, Endseite zwischen Ober- und Unterseite. Die Endseite des jeweiligen Schlitzes ist vorzugsweise parallel zur Längsachse der Gewinderinge verlaufend angeordnet.

Weiter ist vorteilhaft, dass der jeweilige Schlitz durch Sägen zwischen zwei benachbarten Stegen eines Ringes außenumfangsseitig durchgehend von außen nach innen eingebracht ist. Hieraus ergibt sich der Vorteil einer einfachen Herstellung von präzise gefertigten Schlitzen und der diese voneinander separierenden Membran. In einfacher und kostengünstiger Weise lassen sich Schlitze auch in kleine Gewindegrößen einbringen und die Festlegevorrichtung in großer Stückzahl herstellen.

Bei einer weiteren bevorzugten Ausführungsform der erfindungsgemäßen Festlegevorrichtung erstrecken sich die Schlitze in alternierender Weise einmal dem einen, einmal dem anderen Ring zugeordnet zwischen der Membran und einem benachbarten Ring sowie zwischen zwei seiner benachbarten Stege. Diese Schlitzanordnung ermöglicht einen gleichförmigen Krafteintrag beim Anziehen der einen oder mehreren Spannschrauben, von denen erfindungsgemäß zumindest eine in ein Ringsegment eingebracht ist, in welchem zwei benachbarte Schlitze lediglich durch die dazwischen angeordnete Membran voneinander getrennt sind. In Umfangsrichtung gesehen sind diese Ringsegmente jeweils zumindest so lang ausgebildet, dass eine Spannschraube eingebracht werden kann, um die dort angeordnete Membran zu durchdringen.

Bei einer bevorzugten Ausführungsform der erfindungsgemäßen Festlegevorrichtung ist die im unmontierten Zustand parallel zu den Ringen ausgerichtete Membran durch den Spannkrafteintrag der mindestens einen Spannschraube zur Verringerung des Abstandes zwischen den Ringen derart verformt, dass die Membran im montierten Zustand onduliert, insbesondere mit einem gleichförmigen Wellenverlauf, entlang der Ringform des Ringpaares verläuft. Durch den ondulierten, wellenförmigen Verlauf der Membran im montierten Zustand ist, bedingt durch einen gleichmäßigen Spannkrafteintrag der einen oder mehreren Spannschrauben auf das Ringpaar, der gleiche axiale Abstand zwischen den Gewinderingen eingestellt. Die Membran ist im unmontierten Zustand in einer senkrecht zur Längsachse liegenden Ebene angeordnet und kann beim Verformen gegenüber dieser Ebene zumindest teilweise schräg gestellt werden, insbesondere verdreht werden. Beim Einsatz der Festlegevorrichtung sind aufgrund der verbesserten Kräfteverteilung eine verbesserte Kräfteüberlagerung sowie eine Erhöhung der Sicherungskräfte im Gesamten erreicht. Durch eine vorzugsweise vollständige, unterbrechungsfreie Verformung der Membran ist eine bestmögliche Kräfteverteilung und -übertragung bewirkt.

Bei einer weiteren bevorzugten Ausführungsform der erfindungsgemäßen Festlegevorrichtung verläuft die Membran in Abschnitte unterteilt zwischen zwei benachbarten Stegen eines Ringpaares und hat im montierten, verformten Zustand abwechselnd zwischen zwei benachbarten Stegen einen ansteigenden oder einen abfallenden Schräg- oder Bogenverlauf. Durch die Aneinanderreihung von abwechselnd ansteigenden und abfallenden Schräg- oder Bogenverläufen wird ein gleichförmiges Verspannen der beiden Gewinderinge bewirkt und deren Aneinanderlage stabilisiert. Besonders bevorzugt sind die paarweise an- und abfallenden Schräg- oder Bogenverläufe gegenstückartig zueinander ausgebildet. Der jeweilige Schräg- oder Bogenverlauf ist über seine gesamte Länge gleichförmig mit gleicher Schrägstellung oder gleicher Krümmung ausgebildet, alternativ sind mehrere, mindestens zwei, Abschnitte mit unterschiedlicher Schrägstellung oder Krümmung entlang des jeweiligen Verlaufs ausgebildet.

Vorteilhafterweise sind bei einer Ringanordnung mit zwei Spannschrauben zwei Schlitze, bei drei Spannschrauben drei Schlitze, bei vier Spannschrauben vier Schlitze, usw. vorhanden. Die Spannschrauben durchgreifen jeweils zwei benachbarte Schlitze in entlang der Umfangsrichtung der Gewinderinge vorgesehenen Ringsegmenten, wobei jeder Schlitz vorteilhafterweise von mindestens einer, vorzugsweise zwei, Spannschrauben durchgriffen ist. Hieraus ergibt sich der Vorteil, dass mit geringstmöglicher Anzahl von Einzelteilen eine Verformung jedes Schlitzes am Ringpaar realisiert ist. Mit vereinfachtem Montageaufwand ist in dieser besonderen Ausführungsform ein sicheres Verspannen der beiden Gewinderinge erreicht.

Bei einer weiteren bevorzugten Ausführungsform der Erfindung besteht im montierten, verformten Zustand der Membran der kleinste Abstand zwischen einem Steg eines Ringes, an dem die Membran angelenkt ist, und dem gegenüberliegenden Ring an dieser Stelle. Hierdurch ist ein Verformverhalten der Ringpaare vorgegeben, bei welchem die Schlitze jeweils über ihre gesamte Länge schräggestellt oder gebogen werden.

Weiter ist vorteilhaft, dass zumindest ein Ringpaar auf seiner Innenumfangsseite ein durchgehend angeordnetes Innengewinde aufweist, deren Steigungen vorzugsweise gleich sind, und dass die Membran einen freien Innendurchmesser aufweist, der zumindest dem jeweiligen Gewindedurchmesser entspricht, vorzugsweise jedoch größer gewählt ist. Hierdurch ist eine sichere, feste Verbindung der Festlegevorrichtung mit einem Maschinen-, Bau- oder Anlagenteil, das ein zugehöriges Außengewinde aufweist, ermöglicht. Durch eine gegenüber dem Innengewinde in radialer Richtung nach außen hin zurückgesetzte Membran werden mögliche Beeinträchtigungen, wie ein unerwünschtes Verformen der Membran, beim Ein- und Ausschrauben des Teils verhindert, da die Membran mit diesem Teil nicht in Kontakt kommt.

Bei einer bevorzugten Ausführungsform der erfindungsgemäßen Festlegevorrichtung ist der eine Ring eines Ringpaares eine Stellmutter und der andere Ring eine Sicherungsmutter. Die beiden Gewinderinge weisen vorzugsweise den gleichen Außendurchmesser auf. Es ist jedoch auch vorstellbar, hier unterschiedliche, insbesondere nur in einem geringen Maße voneinander abweichende, Außendurchmesser vorzusehen. Durch einen in radialer Richtung überstehenden Gewindering ist ein Schutz der sich an den Gewindering vorzugsweise unmittelbar anschließenden Schlitze realisiert. Die jeweiligen Gewinderinge sind mit einem Innengewinde konzipiert. Es lassen sich jedoch auch Außengewindelösungen realisieren.

Bei einer weiteren bevorzugten Ausführungsform der erfindungsgemäßen Festlegevorrichtung sind die Schlitzbreiten aller Schlitze gleich, und die mindestens eine Spannschraube ist von der freien Stirnseite der Sicherungsmutter her eingebracht in Eingriff mit der Stellmutter bringbar. Hierdurch sind ein homogener Aufbau und eine gleichmäßige Verformung der Schlitzanordnung verwirklicht. Mehrere Spannschrauben sind vorzugsweise in einem regelmäßigen Abstand voneinander an der Stirnseite der Sicherungsmutter verteilt angeordnet, was einen gleichmäßigen Krafteintrag beim Anziehen der Spannschrauben zum Verspannen der beiden Gewinderinge und Verformen der zwischen ihnen angeordneten ringförmigen Membran respektive den Membran-Teilsegmenten bewirkt.

Weitere Vorteile und Merkmale der Erfindung ergeben sich aus den Figuren und der nachfolgenden Beschreibung der Zeichnung. Die vorstehend genannten und die weiter angeführten Merkmale können jeweils einzeln oder in beliebigen Kombinationen an einer erfindungsgemäßen Festlegevorrichtung realisiert sein. Die in den Figuren gezeigten Merkmale sind rein schematisch und nicht maßstäblich zu verstehen. Es zeigen:
- Fig. 1: in perspektivischer Seitenansicht ein erstes Ausführungsbeispiel der erfindungsgemäßen Festlegevorrichtung im unmontierten Zustand;
- Fig. 2: eine Draufsicht von oben auf die Festlegevorrichtung aus Fig. 1;
- Fig. 3: einen Schnitt durch die Festlegevorrichtung aus Fig. 2;
- Fig. 4: die Festlegvorrichtung aus den Fig. 1 bis 3 im montierten Zustand in perspektivischer Seitenansicht vergleichbar der Darstellung nach Fig. 1;
- Fig. 5: ein zweites Ausführungsbeispiel der erfindungsgemäßen Festlegevorrichtung in perspektivischer Seitenansicht; und
- Fig. 6: ein drittes Ausführungsbeispiel der erfindungsgemäßen Festlegevorrichtung in vergleichbarer perspektivischer Seitenansicht.

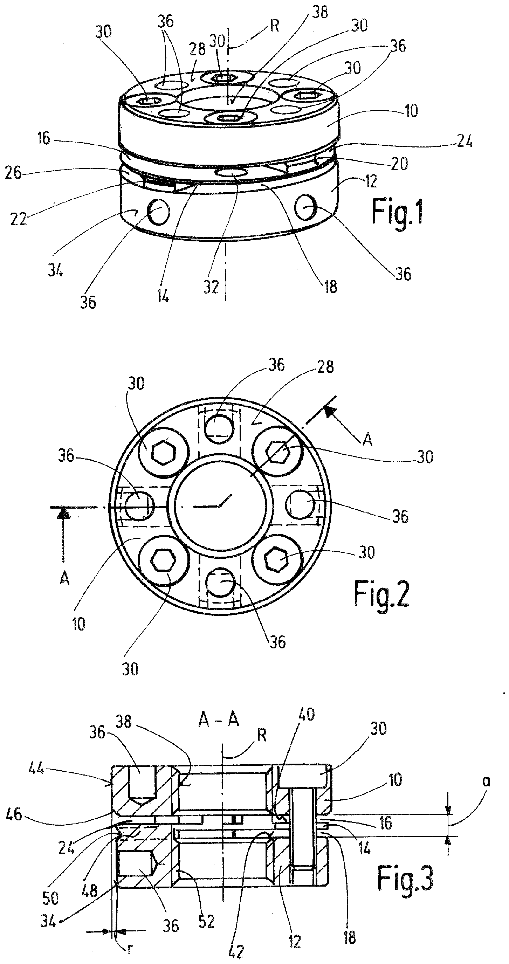

Fig. 1 zeigt in perspektivischer Seitenansicht eine Festlegevorrichtung mit einem ersten Gewindering 10 und einem zweiten Gewindering 12, die rotationssymmetrisch zu einer Längsachse R ausgebildet und in axialer Richtung entlang der Längsachse R in Übereinanderanordnung als Ringpaar 10, 12 angeordnet sind. Die beiden Gewinderinge 10, 12 nehmen zwischen sich eine kreisringförmige Membran 14 auf. Die Membran 14 ist in dem in Fig. 1 gezeigten unmontierten Zustand der Festlegevorrichtung in einer senkrecht zur Längsachse R liegenden Ebene angeordnet. Die Festlegevorrichtung weist insgesamt vier Schlitze 16, 18, 24, 26 und vier Spannschrauben 30 auf.

Die Membran 14 separiert zwei dem ersten Gewindering 10 zugeordnete Schlitze 16, 24 von zwei dem zweiten Gewindering 12 zugeordneten Schlitzen 18, 26. Die Schlitze 16, 18, 24, 26 münden nach außen hin in die sich in radialer Richtung an das Ringpaar 10, 12 anschließende Umgebung aus. Die vier parallel zur Membran 14 geradlinig verlaufenden Schlitze 16, 18, 24, 26 erstrecken sich jeweils in einem Ringsegment des Ringpaares 10, 12 zwischen zwei von vier Stegen 20, 22, 48. Die Stege 20, 22, 48 verlaufen jeweils nur teilweise ringförmig in Abschnitten entlang des Umfangs des jeweiligen Rings 10, 12 und sind einstückiger Bestandteil des Ringpaares 10, 12.

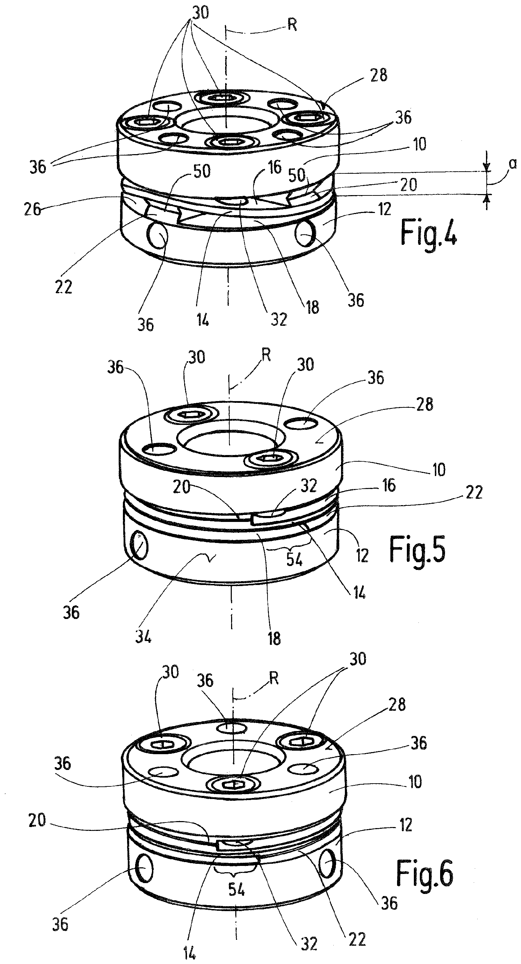

Der erste Schlitz 16 erstreckt sich entlang des Umfangs des ersten Rings 10 in einem Abschnitt vom ersten Steg 20 zu einem in der Darstellung der Fig. 1 nicht gezeigten dritten Steg, welcher dem ersten Steg 20 diametral gegenüberliegt, und bildet in diesem Abschnitt eine komplette Durchbrechung des Ringpaares 10, 12 von außen nach innen. Auf der anderen Seite des ersten Stegs 20 schließt sich ein dritter Schlitz 24 an, der in den ersten Ring 10 eingebracht ist und ebenfalls vom ersten 20 zum dritten Steg verläuft. In vergleichbarer Weise schließt sich an den zweiten Steg 22 in Umfangsrichtung gesehen ein vierter Schlitz 26 an, der an dem zweiten Ring 12 angeordnet ist und wie der zweite Schlitz 18 vom zweiten Steg 22 zu einem in Fig. 1 nicht gezeigten, diametral gegenüberliegenden vierten Steg 48 (vgl. Fig. 5) verläuft.

An den Stegen 20, 22, 48 stützt sich die Membran 14 ab und wird durch diese auf Abstand zu den beiden Ringen 10, 12 gehalten. Die Membran 14 besteht aus einer Platte, deren Dicke in axialer Richtung gesehen in allen drei gezeigten Ausführungsbeispielen kleiner ist als die Breite der Schlitze 16, 18, 24 und 26. Die einzelnen Schlitze 16, 18, 24 und 26 sind vorteilhafterweise durch Sägen zwischen zwei benachbarten Stegen 20, 22, 48 eines Ringes 10, 12 außenumfangsseitig durchgehend von außen nach innen eingebracht. Besonders bevorzugt sind die Schlitzbreiten aller Schlitze 16, 18, 24 und 26 gleich. Dies hat Vorteile hinsichtlich einer einfachen Fertigung und einer guten Funktionalität der Festlegevorrichtung. Demgemäß sind alle Komponenten, wie Schlitze, Stege und Ringe durch mechanische Bearbeitung aus einem einzelnen zylindrischen Hohlkörper erhalten.

Von einer Stirnseite 28 des in Fig. 1 oben dargestellten ersten Gewinderings 10 aus sind in axialer Richtung, parallel zur Längsachse R, insgesamt vier Spannschrauben 30 in das Ringpaar 10, 12 eingebracht. Zur verbesserten Darstellung sind in Fig. 1 nur die Köpfe der Spannschrauben 30 gezeigt. Die Spannschrauben 30 durchgreifen den ersten Gewindering 10 entlang seiner kompletten Erstreckung in axialer Richtung sowie den in der Darstellung der Fig. 1 unten angeordneten zweiten Gewindering 12 zumindest teilweise. Erfindungsgemäß ist die Durchtrittsstelle für mindestens eine, vorzugsweise alle, Spannschrauben 30 entlang der Gewinderinge 10, 12 derart gewählt, dass die mindestens eine Spannschraube 30 zwischen zwei benachbarten Stegen 20, 22, 48 die Membran 14 durchgreift. In Fig. 1 ist eine Durchtrittsöffnung 32 in der Membran 14 für die zugehörige Spannschraube 30 gezeigt, die der besseren Darstellung wegen nicht mit ihrem Gewindeabschnitt gezeigt ist. Entlang des Umfanges des Ringpaares 10, 12 sind für jede der Spannschrauben 30 eine Durchtrittsöffnung im ersten Gewindering 10, eine Durchtrittsöffnung 32 in der Membran 14 und eine Eintrittsöffnung im zweiten Gewindering 12 ausgebildet. Die einer Spannschraube 30 zugeordneten Öffnungen 32 für den Durchtritt der Spannschraube 30 sind jeweils koaxial zu einer parallel zur Längsachse R verlaufenden Achse angeordnet.

An der Stirnseite 28 des ersten Gewinderings 10, einer zweiten Außenumfangsseite 34 und einer in Fig. 1 nicht gezeigten Stirnseite des zweiten Gewinderings 12 sind jeweils mehrere Öffnungen 36 eingebracht, welche als Angriffspunkte für Montagewerkzeuge zum Festlegen und Sichern des Ringpaares 10, 12 an einem Bauteil dienen. Die Draufsicht der Fig. 2 auf die Stirnseite 28 des ersten Gewinderings 10 veranschaulicht, dass die vier Spannschrauben 30 und die vier Öffnungen 36 abwechselnd und bezogen auf die Lage des jeweiligen Mittelpunkts - in regelmäßigen Abständen entlang des Umfanges der Gewinderinge 10, 12 angeordnet sind.

An einer radialen Innenumfangsseite 38 der Gewinderinge 10, 12 ist ein in Fig. 1 nicht näher dargestelltes, durchgehend angeordnetes Innengewinde 52 (vgl. Fig. 3) ausgebildet. Die Steigungen der Innengewinde sind vorzugsweise gleich. Die Membran 14 weist einen freien Innendurchmesser auf, der zumindest dem jeweiligen Gewindedurchmesser entspricht, vorzugsweise jedoch größer gewählt ist. Bei dem in den Fig. 1 bis 4 gezeigten ersten Ausführungsbeispiel ist der erste Gewindering 10 eine Stellmutter und der zweite Gewindering 12 eine Sicherungsmutter. Die von der freien Stirnseite 28 des als Sicherungsmutter ausgebildeten ersten Gewinderings 10 her eingebrachten Spannschrauben 30 sind in Eingriff mit dem als Stellmutter ausgebildeten zweiten Gewindering 12 bringbar.

Der in Fig. 3 gezeigte Schnitt durch das Ringpaar 10, 12 veranschaulicht, dass die jeweilige Spannschraube 30 den ersten Gewindering 10, den ersten 16 oder dritten Schlitz 24, die Membran 14, den zweiten 18 oder vierten Schlitz 26 nacheinander durchgreift und weiter in den zweiten Gewindering 12 eingreift. Über die Spannschrauben 30 ist ein axialer Abstand a zwischen den beiden Ringen 10, 12 einstellbar. Der axiale Abstand a ist die in Richtung der Längsachse R gemessene Strecke zwischen einer den ersten Schlitz 16 und den dritten Schlitz 24 begrenzenden ersten Innenseite 40 des ersten Gewinderings 10 und einer den zweiten Schlitz 18 und den vierten Schlitz 26 begrenzenden zweiten Innenseite 42 des zweiten Gewinderings 12.

Fig. 3 veranschaulicht weiter, dass in dem gezeigten unmontierten Zustand die Membran 14 unverformt sich parallel zu den Ringen 10, 12 ausrichtet. Parallel zu den rotationssymmetrisch zur Längsachse R ausgebildeten Ringen 10, 12 bedeutet in einer im Wesentlichen senkrecht zur Längsachse R ausgerichteten Ebene angeordnet. Fig. 3 veranschaulicht, dass der erste Gewindering 10 einen etwas größeren Außendurchmesser als der zweite Gewindering 12 aufweist und dementsprechend mit einem radialen Überstand r gegenüber dem zweiten Gewindering 12 übersteht.

An einer ersten Außenumfangsseite 44 des ersten Gewinderings 10 ist an der Kante zu den beiden Schlitzen 16, 24 eine umlaufende Fase 46 ausgebildet, die gegenüber der ersten Außenumfangsseite 44 in einem Winkelbereich von vorzugsweise 40° bis 60°, im gezeigten Ausführungsbeispiel in einem Winkel von 45°, abgewinkelt ist. Durch die Fase 46 und die zugehörige Entgratung werden mögliche Verletzungen beim Greifen des Ringpaares 10, 12 durch eine Bedienperson wirksam verhindert und eine von Restverschmutzungen befreite, die von der Bearbeitung stammen sowie gratarme Ausbildung der fertigen Festlegevorrichtung ist erreicht. Bei der zerspanenden Herstellung des Ringpaares 10, 12 ermöglicht die Kombination von Schlitzen 16, 18, 24, 26 mit einer umlaufenden Fase 46 als sogenannter Entgrateinstich eine wirtschaftlich günstige Fertigungsweise, da in einem Entgratungsvorgang sowohl außen als auch innen gleichzeitig zwei Schlitze 16, 18, 24, 26 entgratet werden.

Alternativ kann eine erfindungsgemäße Festlegevorrichtung in einem Urformverfahren, wie einem Dauerformverfahren, gefertigt werden, beispielsweise im Druckgussverfahren aus Nichteisenmetallen, wie Aluminium oder Zink, oder im Spritzgussverfahren aus einem Kunststoffmaterial. In die Form zur Ausbildung des Druckgusses oder des Spritzgusses sind vorzugsweise Schieber (nicht dargestellt) zur Ausbildung der Schlitze 16, 18, 24, 26 integriert, so dass nach Entfernen der Form samt Schieber ohne Bildung von Hinterschnitten die Festlegevorrichtung als fertiges Werkstück erzeugt ist. Dies ermöglicht wahlweise eine komplette Fertigstellung der Festlegevorrichtung in einem Herstellschritt in der Form oder zumindest die Fertigung eines Rohlings, der bereits weitgehend seine Endkontur aufweist, mit anschließender Endbearbeitung, wie dem Einbringen oder einer Verbreiterung der in die Ringe 10, 12 einzubringenden bzw. eingebrachten Schlitze 16, 18, 24, 26.

Die Schnittdarstellung der Fig. 3 ist derart gewählt, dass neben dem Durchtritt der Spannschraube 30 durch zwei von der Membran 14 separierte Schlitze 16, 18 die Anordnung eines Schlitzes 24 zwischen dem einen ersten Gewindering 10 und einem vierten Steg 48 als Teil des anderen zweiten Gewinderings 12 gezeigt ist. Der vierte Steg 48 ist diametral zum in Fig. 3 nicht dargestellten zweiten Steg 22 (vgl. Fig. 1) am Ringpaar 10, 12 angeordnet.

Wie mit gestrichelten Linien angedeutet, erstreckt sich der vierte Steg 48 in axialer Richtung zwischen der Membran 14 und einem Hauptteil des zweiten Gewinderings 12 und weist eine radiale Erstreckung gleich der Schlitzbreite der benachbarten Schlitze 18 und 26 auf. An der zweiten Außenumfangsseite 34 des zweiten Gewinderings 12 radial verlaufend ist eine im Querschnitt dreieckförmige Einschnürung 50 am vierten Steg 48 und dementsprechend an den weiteren Stegen 20, 22 am ersten 10 und zweiten Gewindering 12 ausgebildet. Die Einschnürung 50 bewirkt neben einer erleichterten Fertigung eine Stabilisierung der Stege 20, 22 und 48, die die beim Montieren verformte Membran 14 abstützen und in ihrer jeweiligen Lage halten. Fig. 3 zeigt weiter die Öffnungen 36 und das an den Innenumfangsseiten 38 der beiden Gewinderinge 10, 12 durchgehend angeordnete Innengewinde 52. Hier lässt sich ein Maschinen-, Bau- oder Anlagenteil mit einem korrespondierenden Außengewinde einschrauben.

Fig. 4 zeigt die Festlegevorrichtung aus Fig. 1 in einem montierten Zustand, in dem der Abstand a zwischen den Ringen 10, 12 des Paares 10, 12 durch Anziehen der jeweils zuordenbaren Spannschrauben 30 gegenüber dem in Fig. 1 gezeigten unmontierten Zustand verringert ist. Die Membran 14, welche von den Spannschrauben 30 zwischen zwei benachbarten Stegen 20, 22, 48 durchgriffen wird, ist im montierten Zustand derart verformt, dass die Membran 14 im Abschnitt zwischen dem ersten Steg 20 und dem zweiten Steg 22 einem Schrägverlauf folgt, in der Darstellung der Fig. 4 von rechts unten nach links oben. Auf diese Weise sind die beiden Gewinderinge 10, 12 miteinander und mit einem von diesem umfassten Maschinen-, Anlagen- oder Bauteil verspannt und an diesem sicher festgelegt. Die ringförmig umlaufende Membran 14 erstreckt sich entlang des gesamten Umfanges des Ringpaares 10, 12 zwischen vier Stegen 20, 22 und 48 (vgl. Fig. 3) in Abschnitte unterteilt und verläuft im montierten Zustand vorzugsweise onduliert entlang der Ringform des Ringpaares 10, 12.

Die Abschnitte der Membran 14 haben abwechselnd einen ansteigenden oder einen abfallenden Schrägverlauf, was in Fig. 4 für den sich links des zweiten Steges 22 anschließenden vierten Schlitz 26 und den dortigen Abschnitt der Membran 14 gezeigt ist. Durch den schräg- oder bogenförmigen Verlauf der Membran 14 im montierten Zustand ist ein gleichmäßiger Spannkrafteintrag der Spannschrauben 30 auf das Ringpaar 10, 12 sichergestellt und der gleiche axiale Abstand a zwischen den Innenseiten 40, 42 (vgl. Fig. 3) der Gewinderinge 10, 12 ausgebildet. Die Verformung der Membran 14 ist in Fig. 4 überzeichnet dargestellt. Es versteht sich, dass sowohl im unmontierten Zustand der Fig. 1 als auch im montierten Zustand der Fig. 4 die Stirnseiten 28 an der Oberseite des ersten Gewinderinges 10 und an der Unterseite des zweiten Gewinderinges 12 planparallel zueinander ausgerichtet sind.

Die Fig. 1 und 4 veranschaulichen, dass die Schlitze 16, 18, 24, 26 in alternierender Weise einmal dem einen 10, einmal dem anderen Ring 12 zugeordnet sich zwischen der Membran 14 und einem benachbarten Ring 10, 12 sowie zwischen zwei seiner benachbarten Stege 20, 22, 48 erstrecken. Im gezeigten ersten Ausführungsbeispiel sind die Stege 20, 22, 48 jeweils in der Mitte des benachbarten Schlitzes 16, 18, 24, 26 - in Umfangsrichtung gesehen - angeordnet und dort mit der Membran 14 einstückig verbunden. Ebenfalls mittig zwischen zwei benachbarten Stegen 20, 22, 48 durchgreift jeweils eine Spannschraube 30 die Membran 14 an einer Durchtrittsöffnung 32 sowie weiter die benachbart angeordneten Schlitze 16, 18, 24, 26. Durch die Verformung der Membran 14 im montierten Zustand ist der kleinste Abstand zwischen einem Steg 20, 22, 48 eines Ringes 10, 12, an dem die Membran 14 angelenkt ist, und dem gegenüberliegenden Ring 10, 12 an dieser Stelle ausgebildet. In der Darstellung der Fig. 4 ist an den Stegen 20, 22, 48 als jeweilige Näherungsstelle der jeweilige Ring 10, 12 nahezu in Anlage mit der ansonsten durch den zugehörigen Schlitz 16, 18, 24, 26 beabstandeten Membran 14 gebracht.

In den Fig. 5 und 6 sind jeweils in perspektivischer Seitenansicht ein zweites und ein drittes Ausführungsbeispiel der Festlegevorrichtung im unmontierten Zustand gezeigt. Von dem in Fig. 1 gezeigten ersten Ausführungsbeispiel unterscheidet sich das zweite Ausführungsbeispiel der Fig. 5 dadurch, dass zwei Spannschrauben 30 und lediglich zwei Schlitze 16, 18 in das Ringpaar 10, 12 eingebracht sind. In zwei Ringsegmenten 54 des Ringpaares 10, 12, in welchen jeweils beide Schlitze 16, 18 entlang des Umfangs verlaufen, durchtritt die jeweilige Spannschraube 30 den ersten Schlitz 16, die Membran 14 an der jeweiligen Durchtrittsöffnung 32 und den zweiten Schlitz 18. Am in Fig. 5 gezeigten einen Ringsegment 54 schließen sich an den ersten Schlitz 16 der erste Steg 20 sowie an den zweiten Schlitz 18 der zweite Steg 22 an. Der erste Schlitz 16 erstreckt sich - in der Fig. 5 nach links - über einen Winkel von 180° Grad hinaus vom gezeigten Ringsegment 54 mit der einen Spannschraube 30 bis zum in Fig. 5 nicht gezeigten anderen Ringsegment mit der anderen Spannschraube 30. Der zweite Schlitz 18 verläuft dementsprechend - in der Fig. 5 nach rechts - vom Ringsegment 54 zum anderen Ringsegment auf der gegenüberliegenden Seite des Ringpaares 10, 12. Beide Stege 20, 22 weisen in radialer Richtung eine Einschnürung 50 (vgl. Fig. 3, 4) auf. An den Stirnseiten 28 der Gewinderinge 10, 12 und an der zweiten Außenumfangsseite 34 des zweiten Gewinderings 12 sind jeweils zwei Öffnungen 36 vorgesehen. Beim Anziehen der Spannschrauben 30 werden die beiden Ringe 10, 12 in axialer Richtung entlang der Längsachse R aufeinander zubewegt und die Membran 14 ausgehend von den in den Ringsegmenten 54 an ihr angreifenden Spannschrauben 30 unter Bildung zumindest eines Schräg- oder Bogenverlaufs verformt.

Vom ersten und zweiten Ausführungsbeispiel unterscheidet sich das in Fig. 6 gezeigte dritte Ausführungsbeispiel dadurch, dass drei Spannschrauben 30 und drei Schlitze 16, 18 an der Festlegevorrichtung ausgebildet sind. Die in der Darstellung der Fig. 6 gezeigte Spannschraube 30 durchtritt im Ringsegment 54 die Schlitze 16, 18 und die Membran 14 an der einen Durchtrittsöffnung 32. Die beiden weiteren Spannschrauben 30 durchtreten jeweils den ersten 16 oder zweiten Schlitz 18 und einen in Fig. 6 nicht gezeigten dritten Schlitz sowie die diesen voneinander separierende Membran 14 an jeweils einer weiteren Durchtrittsöffnung. Weiter sind jeweils drei Öffnungen 36 an den Stirnseiten 28 der Gewinderinge 10, 12 und drei Öffnungen 36 an der zweiten Außenumfangsseite 34 des zweiten Gewinderings 12 vorgesehen. In allen drei Ausführungsbeispielen sind an der nicht gezeigten Stirnseite des zweiten Gewinderinges 12 die gleiche Anzahl von Öffnungen 36 wie an der Stirnseite 28 des ersten Gewinderings 10 ausgebildet.

Es versteht sich, dass Anordnungen mit mehr Spannschrauben 30 und mehr oder weniger Schlitzen 16, 18, 24 und 26 erfindungsgemäß am Ringpaar 10, 12 vorgesehen sein können, wobei die Spannschraubenanzahl von der Schlitzanzahl abweichen kann. Auch brauchen nicht alle Spannschrauben außerhalb der Stege angeordnet zu sein, die zum nachfolgenden Ring einen Spalt mit diesem begrenzen.

## Patentansprüche

1. Festlegevorrichtung mit mindestens zwei Gewinderingen (10, 12), die zwischen sich eine Membran (14) aufnehmen, die einstückiger Bestandteil dieses Ringpaares (10, 12) ist und die durch eingebrachte, in einem unmontierten Zustand geradlinig verlaufende Schlitze (16, 18, 24, 26), die allesamt nach außen hin in die Umgebung ausmünden, sowie an nur teilweise ringförmig verlaufenden Stegen (20, 22) sich abstützend zu den Ringen (10, 12) auf Abstand gehalten ist, und mit mindestens einer Spannschraube (30), mittels der der axiale Abstand zwischen den Ringen (10, 12) einstellbar ist, wobei zumindest eine Spannschraube (30) zwischen zwei benachbarten Stegen (20, 22) die Membran (14) durchgreift, dass im unmontierten Zustand die Membran (14) unverformt sich parallel zu den Ringen (10, 12) ausrichtet und in einem montierten Zustand zwischen den Stegen (20, 22) in einem verformten Zustand in Richtung auf mindestens einen der Ringe (10, 12) zumindest teilweise unter Bildung eines Schräg- oder Bogenverlaufs zugestellt ist, sobald der Abstand (a) zwischen den Ringen (10, 12) eines Paares (10, 12) mittels der jeweils zuordenbaren Spannschraube (30) verringert ist, und dass die zumindest eine die Membran (14) durchgreifende Spannschraube (30) benachbart angeordnete Schlitze (16, 18, 24, 26) durchgreift, die von der Membran (14) separiert sind.

2. Festlegevorrichtung nach Anspruch 1, **dadurch gekennzeichnet, dass** die Membran (14) aus einer Platte besteht, deren Dicke einer Schlitzbreite in ihrem unverformten Zustand entspricht oder kleiner ist.

3. Festlegevorrichtung nach Anspruch 1 oder 2, **dadurch gekennzeichnet, dass** der jeweilige Schlitz (16, 18, 24, 26) durch Sägen zwischen zwei benachbarten Stegen (20, 22, 48) eines Ringes (10, 12) außenumfangsseitig durchgehend von außen nach innen eingebracht ist.

4. Festlegevorrichtung nach einem der vorstehenden Ansprüche, **dadurch gekennzeichnet, dass** die Schlitze (16, 18, 24, 26) in alternierender Weise einmal dem einen, einmal dem anderen Ring (10, 12) zugeordnet sich zwischen der Membran (14) und einem benachbarten Ring (10, 12) sowie zwischen zwei seiner benachbarten Stege (20, 22, 48) erstrecken.

5. Festlegevorrichtung nach einem der vorstehenden Ansprüche, **dadurch gekennzeichnet, dass** die im unmontierten Zustand parallel zu den Ringen (10, 12) ausgerichtete Membran (14) durch den Spannkrafteintrag der mindestens einen Spannschraube (30) zur Verringerung des Abstandes (a) zwischen den Ringen (10, 12) derart verformt ist, dass die Membran (14) im montierten Zustand onduliert, insbesondere mit einem gleichförmigen Wellenverlauf, entlang der Ringform des Ringpaares (10, 12) verläuft.

6. Festlegevorrichtung nach einem der vorstehenden Ansprüche, **dadurch gekennzeichnet, dass** die Membran (14) in Abschnitte unterteilt zwischen zwei benachbarten Stegen (20, 22, 48) eines Ringpaares (10, 12) verläuft und im montierten, verformten Zustand abwechselnd zwischen zwei benachbarten Stegen (20, 22, 48) einen ansteigenden oder einen abfallenden Schräg- oder Bogenverlauf hat.

7. Festlegevorrichtung nach einem der vorstehenden Ansprüche, **dadurch gekennzeichnet, dass** bei einer Ringanordnung mit zwei Spannschrauben (30) zwei Schlitze (16, 18), bei drei Spannschrauben (30) drei Schlitze (16, 18, 24), bei vier Spannschrauben (30) vier Schlitze (16, 18, 24, 26), usw. vorhanden sind.

8. Festlegevorrichtung nach einem der vorstehenden Ansprüche, **dadurch gekennzeichnet, dass** im montierten, verformten Zustand der Membran (14) der kleinste Abstand zwischen einem Steg (20, 22, 48) eines Ringes (10, 12), an dem die Membran (14) angelenkt ist, und dem gegenüberliegenden Ring (10, 12) an dieser Stelle besteht.

9. Festlegevorrichtung nach einem der vorstehenden Ansprüche, **dadurch gekennzeichnet, dass** zumindest ein Ringpaar (10, 12) auf seiner Innenumfangsseite (38) ein durchgehend angeordnetes Innengewinde (52) aufweist, deren Steigungen vorzugsweise gleich sind, und dass die Membran (14) einen freien Innendurchmesser aufweist, der zumindest dem jeweiligen Gewindedurchmesser entspricht, vorzugsweise jedoch größer gewählt ist.

10. Festlegevorrichtung nach einem der vorstehenden Ansprüche, **dadurch gekennzeichnet, dass** der eine Ring (10) eines Ringpaares (10, 12) eine Stellmutter und der andere Ring (12) eine Sicherungsmutter ist.

11. Festlegevorrichtung nach einem der vorstehenden Ansprüche, **dadurch gekennzeichnet, dass** die Schlitzbreiten aller Schlitze (16, 18, 24, 26) gleich sind, und dass die mindestens eine Spannschraube (30) von der freien Stirnseite (28) der Sicherungsmutter (10) her eingebracht in Eingriff mit der Stellmutter (12) bringbar ist.

12. Festlegevorrichtung nach einem der vorstehenden Ansprüche, gebildet durch einen hohlzylindrischen, vorzugsweise metallischen Ausgangskörper, dessen entlang einer Längsachse (R) sich erstreckender Hohlraum mindestens eine Gewindestrecke trägt und dessen Umhüllende quer zur Ausrichtung der Längsachse (R) gesehen mit Schlitzen (16, 18, 24, 26) derart versehen ist, dass zwischen zwei derart entstehenden, benachbarten Ringen (10, 12) sich die Membran (14) erstreckt, die in alternierender Reihenfolge von Stegen (20, 22, 48) getragen, einmal an den einen (10) und einmal an den anderen Ring (12) über Anlenkstellen mehrfach angelenkt ist.

13. Festlegevorrichtung nach einem der vorstehenden Ansprüche, **dadurch gekennzeichnet, dass** bei gleichem oder verschiedenem Außendurchmesser der Ringe (10, 12) die Umhüllende einen fiktiven Kreiszylinder bzw. in einer der Durchmesserreduzierung entsprechend gestuften Anordnung mindestens zwei fiktive, zueinander konzentrische Kreiszylinder entlang der Längsachse (R) ausbildet.

14. Festlegevorrichtung nach einem der vorstehenden Ansprüche, **dadurch gekennzeichnet, dass** der jeweilige, zwischen zugeordnetem Ring (10, 12) und der Membran (14) verlaufende Steg (20, 22, 48) zumindest mit seinen außenumfangsseitigen Anlenkstellen Teil der Umhüllenden ist.

15. Festlegevorrichtung nach einem der vorstehenden Ansprüche, **dadurch gekennzeichnet, dass** der jeweilige Steg (20, 22, 48), insbesondere entlang seines Außenumfanges, zum Einstellen seiner Eigensteifigkeit mit einer Konturänderung, vorzugsweise in Form einer Einschnürung (50), versehen ist.

## Claims

1. Fixing device with at least two threaded rings (10, 12) which accommodate between them a diaphragm (14) which is an integral part of this ring pair (10, 12) and which is kept at a distance from the rings (10, 12) by introduced slots (16, 18, 24, 26), which slots run linearly in an unassembled state and all open outwards into the environment, and rests on webs (20, 22) which are only partially annular, and with at least one tensioning screw (30) by means of which the axial distance between the rings (10, 12) is adjustable, wherein at least one tensioning screw (30) extends through the diaphragm (14) between two adjacent webs (20, 22), in that, in the unassembled state, the diaphragm (14) is oriented parallel to the rings (10, 12) without deformation and, in an assembled state, the diaphragm is moved between the webs (20, 22) in a deformed state towards at least one of the rings (10, 12), at least partially forming an oblique or arced profile as soon as the distance (a) between the rings (10, 12) of a pair (10, 12) is reduced by means of the respectively assignable tensioning screw (30), and in that the at least one tensioning screw (30) extending through the diaphragm (14) extends through adjacently arranged slots (16, 18, 24, 26) which are separated from the diaphragm (14).

2. Fixing device according to claim 1, **characterised in that** the diaphragm (14) consists of a plate, the thickness of which corresponds to or is smaller than a slot width in its undeformed state.

3. Fixing device according to claim 1 or 2, **characterised in that** the respective slot (16, 18, 24, 26) is introduced by sawing continuously from outside to inside on the outer circumference between two adjacent webs (20, 22, 48) of a ring (10, 12).

4. Fixing device according to one of the preceding claims, **characterised in that** the slots (16, 18, 24, 26), which are associated in an alternating manner once with one ring (10, 12), once with the other ring (10, 12), extend between the diaphragm (14) and an adjacent ring (10, 12) as well as between two of its adjacent webs (20, 22, 48).

5. Fixing device according to one of the preceding claims, **characterised in that** the diaphragm (14) which, in the unassembled state, is oriented parallel to the rings (10, 12) is deformed by the applied tensioning force of the at least one tensioning screw (30) to reduce the distance (a) between the rings (10, 12) in such a manner that, in the assembled state, the diaphragm (14) undulates, extending, in particular with a uniform wave profile, along the annular shape of the ring pair (10, 12).

6. Fixing device according to one of the preceding claims, **characterised in that** the diaphragm (14), which is divided into portions, passes between two adjacent webs (20, 22, 48) of a ring pair (10, 12) and, in the assembled, deformed state, has alternately an ascending or descending oblique or arced profile between two adjacent webs (20, 22, 48).

7. Fixing device according to one of the preceding claims, **characterised in that** there are two slots (16, 18) in a ring arrangement with two tensioning screws (30), three slots (16, 18, 24) with three tensioning screws (30), four slots (16, 18, 24, 26) with four tensioning screws (30), and so on.

8. Fixing device according to one of the preceding claims, **characterised in that**, in the assembled, deformed state of the diaphragm (14), the shortest distance between a web (20, 22, 48) of a ring (10, 12) on which the diaphragm (14) is hinged and the opposing ring (10, 12) exists at this point.

9. Fixing device according to one of the preceding claims, **characterised in that** at least one ring pair (10, 12) has on its inner circumference (38) a continuously arranged internal thread (52), the pitches of which are preferably identical, and **in that** the diaphragm (14) has an unobstructed internal diameter which corresponds at least to the respective thread diameter, but is preferably selected to be larger.

10. Fixing device according to one of the preceding claims, **characterised in that** the one ring (10) of a ring pair (10, 12) is an adjusting nut and the other ring (12) is a locking nut

11. Fixing device according to one of the preceding claims, **characterised in that** the slot widths of all slots (16, 18, 24, 26) are identical, and **in that** the at least one tensioning screw (30), introduced from the unobstructed front face (28) of the locking nut (10), can be brought in to engagement with the adjusting nut (12).

12. Fixing device according to one of the preceding claims, formed by a hollow cylindrical, preferably metal starting body, the cavity of which extending along a longitudinal axis (R) bears at least one threaded section and the envelope of which, viewed transversely to the orientation of the longitudinal axis (R), is provided with slots (16, 18, 24, 26) in such a manner that the diaphragm (14) extends between two adjacent rings (10, 12) created in this manner, the diaphragm being carried in an alternating sequence by webs (20, 22, 48), once on the one ring (10) and once on the other ring (12) and being hinged multiple times via articulation points.

13. Fixing device according to one of the preceding claims, **characterised in that**, with the same or different external diameter of the rings (10, 12), the envelope forms a notional circular cylinder or, in a stepped arrangement corresponding to the reduction of the diameter, forms at least two notional circular cylinders concentric with each other along the longitudinal axis (R).

14. Fixing device according to one of the preceding claims, **characterised in that** the respective web (20, 22, 48) running between the associated ring (10, 12) and the diaphragm (14) is part of the envelope, at least with its outer circumferential articulation points.

15. Fixing device according to one of the preceding claims, **characterised in that** the respective web (20, 22, 48) is provided, in particular along its outer circumference, with a contour change, preferably in the form of a constriction (50), for adjusting its inherent rigidity.

## Revendications

1. Dispositif de fixation comprenant au moins deux bagues (10, 12) filetées, qui reçoivent entre elles une membrane (14), qui est une partie constitutive en une seule pièce de cette paire (10, 12) de bagues et qui, par des fentes (16, 18, 24, 26), qui sont ménagées, qui s'étendent en ligne droite à l'état non monté et qui toutes ensemble débouchent vers l'extérieur à l'atmosphère ambiante, est maintenue à distance des bagues (10, 12) en s'appuyant sur des entretoises (20, 22) ne s'étendant qu'en partie annulairement, et comprenant au moins une vis (30) de serrage, au moyen de laquelle la distance axiale entre les bagues (10, 12) est réglable, dans lequel la au moins une vis (30) de serrage pénètre dans la membrane (14) entre deux entretoises (20, 22) voisines, en ce que, à l'état non monté, la membrane (14) est orientée non déformée parallèlement aux bagues (10, 12) et, dans un état monté, s'avance au moins en partie en formant une courbe inclinée ou arquée entre les entretoises (20, 22) dans un état déformé en direction d'au moins l'une des bagues (10, 12) dès que la distance (a) entre les bagues (10, 12) d'une paire (10, 12) est diminuée au moyen de la vis (30) de serrage respective pouvant être associée et en ce que la au moins une vis (30) de serrage pénétrant dans la membrane (14) pénètre dans des fentes (16, 18, 24, 26) voisines, qui sont séparées de la membrane (14).

2. Dispositif de fixation suivant la revendication 1, **caractérisé en ce que** la membrane (14) est constituée d'une plaque dont l'épaisseur correspond, dans son état non déformé, à une largeur de fente ou en est plus petite.

3. Dispositif de fixation suivant la revendication 1 ou 2, **caractérisé en ce que** la fente (16, 18, 24, 26) respective est ménagée de manière continue de l'extérieur vers l'intérieur, du côté du pourtour extérieur par sciage entre deux entretoises (20, 22, 48) voisines d'une bague (10, 12).

4. Dispositif de fixation suivant l'une des revendications précédentes, **caractérisé en ce que** les fentes (16, 18, 24, 26) associées d'une manière alternée, tantôt à l'une, tantôt à l'autre bague (10, 12), s'étendent entre la membrane (14) et une bague (10, 12) voisine ainsi qu'entre ses deux entretoises (20, 22, 48) voisines.

5. Dispositif de fixation suivant l'une des revendications précédentes, **caractérisé en ce que** la membrane (14) dirigée à l'état non monté parallèlement aux bagues (10, 12) est déformée par l'application d'une force de serrage par la au moins une vis (30) de serrage pour diminuer la distance (a) entre les bagues (10, 12), de manière à ce que la membrane (14) ondule à l'état monté, en s'étendant notamment en ayant une courbe d'ondulation uniforme le long de la forme annulaire de la paire (10, 12) de bagues.

6. Dispositif de fixation suivant l'une des revendications précédentes, caractérisé la membrane (14) subdivisée en parties s'étend entre deux entretoises (20, 22, 48) voisines d'une paire (10, 12) de bagues et a, à l'état monté déformé, en alternance entre deux entretoises (20, 22, 48) voisines, une courbe inclinée ou arquée ascendante ou descendante.

7. Dispositif de fixation suivant l'une des revendications précédentes, **caractérisé en ce que**, pour un agencement de bagues ayant deux vis (30) de serrage, il est prévu deux fentes (16, 18), pour trois vis (30) de serrage trois fentes (16, 18, 24), pour quatre vis (30) de serrage quatre fentes (16, 18, 24, 26), et ainsi de suite.

8. Dispositif de fixation suivant l'une des revendications précédentes, **caractérisé en ce que**, à l'état monté déformé de la membrane (14), la distance la plus petite entre une entretoise (20, 22, 48) d'une bague (10, 12), à laquelle la membrane (14) est articulée, et la bague (10, 12) opposée est constituée à cet endroit.

9. Dispositif de fixation suivant l'une des revendications précédentes, **caractérisé en ce que** au moins une paire (10, 12) de bagues a, sur sa face (38) périphérique intérieure, un filetage (52) intérieur continu, dont les pas sont de préférence égaux, et **en ce que** la membrane (14) a un diamètre intérieur libre, qui correspond au moins au diamètre respectif du filetage, mais de préférence est plus grand.

10. Dispositif de fixation suivant l'une des revendications précédentes, **caractérisé en ce que** l'une des bagues (10) d'une paire (10, 12) de bagues est un écrou de pose et l'autre bague (12) un écrou de sécurité.

11. Dispositif de fixation suivant l'une des revendications précédentes, **caractérisé en ce que** les largeurs de toutes les fentes (16, 18, 24, 26) sont égales et **en ce que** la au moins une vis (30) de serrage, introduite à partir du côté (28) frontal libre de l'écrou (10) de sécurité, peut être mise en prise avec l'écrou (12) de pose.

12. Dispositif de fixation suivant l'une des revendications précédentes, formé d'un corps de départ cylindrique creux, de préférence métallique, dont la cavité, s'étendant suivant un axe (R) longitudinal, porte au moins une étendue filetée et dont l'enveloppe est pourvue, considérée transversalement à la direction de l'axe (R) longitudinal, de fentes (16, 18, 24, 26), de manière à ce qu'entre deux bagues (10, 12) voisines ainsi créées s'étende la membrane (14) qui, portée en succession alternée par des entretoises (20, 22, 48), est articulée plusieurs fois, tantôt à l'une (10) et tantôt à l'autre bague (12), par des points d'articulation.

13. Dispositif de fixation suivant l'une des revendications précédentes, **caractérisé en ce que**, pour un diamètre extérieur égal ou différent des bagues (10, 12), l'enveloppe d'un cylindre circulaire fictif ou d'un agencement étagé correspondant à la réduction de diamètre forment au moins suivant l'axe (R) longitudinal deux cylindres circulaires fictifs concentriques l'un à l'autre.

14. Dispositif de fixation suivant l'une des revendications précédentes, **caractérisé en ce que** l'entretoise (20, 22, 48) respective s'étendant entre une bague (10, 12) associée et la membrane (14) est au moins, par son point d'articulation du côté du pourtour extérieur, une partie de l'enveloppe.

15. Dispositif de fixation suivant l'une des revendications précédentes, **caractérisé en ce que** l'entretoise (20, 22, 48) respective est pourvue, notamment sur son pourtour extérieur, pour le réglage de sa rigidité propre, d'une modification de contour, de préférence sous la forme d'une constriction (50).
